(19) Europäisches Patentamt
European Patent Office
Office européen des brevets

(11) **EP 1 777 704 A1**

(12) **EUROPEAN PATENT APPLICATION**
published in accordance with Art. 158(3) EPC

(43) Date of publication:
**25.04.2007 Bulletin 2007/17**

(51) Int Cl.:
***G11B 7/09*** (2006.01)     ***G11B 7/0045*** (2006.01)
***G11B 7/125*** (2006.01)

(21) Application number: **05765601.9**

(22) Date of filing: **07.07.2005**

(86) International application number:
**PCT/JP2005/012575**

(87) International publication number:
**WO 2006/006494 (19.01.2006 Gazette 2006/03)**

(84) Designated Contracting States:
**DE FR GB**

(30) Priority: **09.07.2004 JP 2004202629**

(71) Applicant: **SONY CORPORATION**
**Tokyo 141-0001 (JP)**

(72) Inventor: **NAGASHIMA, Hideki**
**c/o Sony Corporation**
**Shinagawa-ku**
**Tokyo (JP)**

(74) Representative: **Nicholls, Michael John**
**J.A. KEMP & CO.**
**14, South Square**
**Gray's Inn**
**London WC1R 5JJ (GB)**

(54) **DISK DEVICE, AND SIGNAL PRODUCING METHOD**

(57)     To provide a disc apparatus capable of normally continuing to play back and record data without stopping the processing when dew condensation occurs.

When a dew condensation sensor 11 is not detecting the occurrence of dew condensation, a drive controller 9 measures the amount of reflected light at normal time through an optical detector 14, a signal processing circuit 15, an RFIC 5, and a DSP 6. Also, when the dew condensation sensor 11 has detected the occurrence of dew condensation, the drive controller 9 measures the amount of reflected light at dew-condensation time through the optical detector 14, the signal processing circuit 15, the RFIC 5, and the DSP 6. The drive controller 9 controls one of or both of the driver 7 and the RFIC 5 on the basis of the amount of reflected light at normal time and the amount of reflected light at dew-condensation time so as to control one of or both of the laser power and the servo gain.

FIG. 4

**Description**

Technical Field

This invention relates to a disc apparatus using a so-called a disc recording medium, such as an optical disc recording medium, for example a DVD (Digital Versatile Disc), a CD (Compact Disc), etc., and a magneto-optical disc, such as an MD (Mini Disc®), etc., and to a method of controlling the operation used in this disc apparatus.

Background Art

A playback apparatus, a recording and playback apparatus, and an imaging apparatus, etc., using a disc recording medium, such as a DVD, a CD, an MD, etc., have become widespread for use. In various kinds of electronic system using a disc recording medium, dew condensation sometimes occurs in the electronic system by a change in temperature of a use environment.

When dew condensation occurs in an electronic system using a disc recording medium, an objective lens of a so-called pickup section, which emits laser light onto a disc recording medium and receives the reflected light, and the surface of the disc recording medium are misted, and thus the servo is not normally applied, or the laser light with sufficient power for recording cannot be emitted onto the disc recording medium. Accordingly, it might become not possible to normally play back or record data.

In order to cope with such a case where dew condensation has occurred, Japanese Unexamined Patent Application Publication No. 2003-168259 has disclosed a technique in which when dew condensation has been detected, the processing, such as playback, recording, etc., performed at that time is prohibited (stopped), the disc is rotated idly to be heated up, and the stopped processing such as playback, recording, etc., is continued after eliminating the dew condensation.

Disclosure of Invention

Incidentally, in the case of the technique described in Patent Document 1 described above, it is possible to reliably prevent the playback and recording operations from malfunctioning at dew-condensation time. However, if the playback and recording operations are stopped every time dew condensation occurs, the processing is delayed, and thus it is undesirable. For example, when data is going to be recorded on a disc recording medium, if dew condensation has occurred, the apparatus goes to a state of not allowing the recording.

Thus, for example, when recording processing is stopped by the occurrence of dew condensation at recording time, the storing the data to be recorded into a predetermined memory and performing the recording processing using the data in that memory at the time of restarting the recording processing are considered. However, data to be stored is often in large volume, such as moving image data. Accordingly, it becomes necessary to use a memory capable of storing a large volume of data to be processed when the processing is stopped at the time of dew condensation.

However, it increases the cost of an electronic system to have a large-capacity memory in the system only for avoiding the stop of the processing at the time of dew condensation occurrence, and thus it is thought that sufficient advantages are difficult to be obtained to meet the increase in cost.

In view of the above, it is an object of this invention to eliminate the above-described problems, and to provide a disc apparatus capable of normally continuing to play back and to record data without stopping the processing at dew-condensation occurrence time as well as a method of controlling the operations at dew-condensation time used in this disc apparatus.

In order to solve the above-described problems, according to the invention described in Claim 1, there is provided a disc apparatus including:

a laser light source for generating laser light to be emitted on a disc recording medium;
driving means for driving the laser light source;
light receiving means for receiving the laser light emitted from the laser light source reflected from the disc recording medium;
servo-error signal processing means for forming one servo-error signal or more on the basis of the amount of receiving light of the reflected light received by the light receiving means;
dew-condensation detecting means for detecting the occurrence of dew condensation in the apparatus;
when the occurrence of dew condensation is not detected by the dew-condensation detecting means, first measuring means for measuring the amount of reflected light at normal time by the light receiving means;
when the occurrence of dew condensation is detected by the dew-condensation detecting means, second measuring means for measuring the amount of reflected light at dew-condensation time by the light receiving means; and

when the occurrence of dew condensation is detected by the dew-condensation detecting means, control means for controlling one of or both of the driving means and the servo-error signal processing means on the basis of the amount of reflected light at normal time from the first measuring means and the amount of reflected light at dew-condensation time from the second measuring means.

By the disc apparatus of the invention described in Claim 1, laser light is emitted from the laser light source driven by the driving means onto a disc recording medium, the reflected light of the laser light from the disc recording medium is received by the light receiving means, and a servo-error signal, such as a focus-error signal, a tracking-error signal, etc., is formed by the servo-error signal processing means in accordance with the amount of received light.

Also, the occurrence of dew condensation is detected by the dew-condensation detecting means. When the occurrence of dew condensation is not detected, the first measuring means measures the amount of reflected light at normal time (the amount of reflected light at normal time). When the occurrence of dew condensation is detected, the second measuring means measures the amount of reflected light at dew-condensation time (the amount of reflected light at dew-condensation time).

When the occurrence of dew condensation is detected, the control means controls one of or both of the driving means for driving the laser light source and the servo-error signal processing means for forming the servo-error signal on the basis of the amount of reflected light at normal time measured by the first measuring means and the amount of reflected light at dew-condensation time measured by the second measuring means.

Thus, it is possible to trace (scan) a disc recording medium by the laser light with proper power at the time of the occurrence of dew condensation, and to trace a disc recording medium appropriately in the same manner as the case where dew condensation does not occur by controlling the gain of the servo-error signal formed by the servo-error signal processing means. Accordingly, it is possible to perform the operations properly at the time of the occurrence of dew condensation without stopping the recording processing and the playback processing.

Also, the disc apparatus of the invention described in Claim 2 is the disc apparatus described in Claim 1, wherein the control means adjusts laser power at pit-formation time of the laser light emitted from the laser light source to the disc recording medium and laser power at non-pit-formation time by controlling the driving means at the time of recording data on the disc recording medium.

By the disc apparatus of the invention described in Claim 2, the power of the laser light used for recording is controlled at data recording time. In this case, the control is performed so as to increase the power of the laser light used both at pit-formation time and at non-pit-formation time, and thus the amount of received light of the reflected light received by the receiving means is increased as a result.

Thus, it is possible to form the servo-error signal properly, to correctly scan the track by the laser light with proper laser power, and to correctly perform data recording at the time of the occurrence of dew condensation.

Also, the disc apparatus of the invention described in Claim 3 is the disc apparatus described in Claim 1, wherein the control means adjusts laser power at pit-formation time of the laser light emitted from the laser light source to the disc recording medium and controls a gain of the servo-error signal formed by the servo-error signal processing means by controlling the driving means and the servo-error signal processing means at the time of recording data on the disc recording medium.

By the disc apparatus of the invention described in Claim 3, the laser power of the laser light used at pit-formation time at data recording time is controlled, and the gain of the servo-error signal formed on the basis of the amount of received light of the reflected light received by the light receiving means is controlled.

Thus, it is possible to form the servo-error signal properly, to correctly scan the track by the laser light with proper laser power, and to form a pit in accordance with data. That is to say, it is possible to correctly perform data recording even at the time of the occurrence of dew condensation.

Also, the disc apparatus of the invention described in Claim 4 is the disc apparatus described in Claim 1, wherein the control means adjusts laser power of the laser light emitted from the laser light source to the disc recording medium by controlling the driving means at the time of playing back data from the disc recording medium.

By the disc apparatus of the invention described in Claim 4, the power of the laser light for playback used for reading data from the disc recording medium at data playback time is controlled. Thus, it is possible to form the servo-error signal properly, to correctly scan the track by the laser light with proper laser power, and to read data recorded on the disc recording medium. That is to say, it is possible to correctly read data from the disc recording medium even at the time of the occurrence of dew condensation.

Also, the disc apparatus of the invention described in Claim 5 is the disc apparatus described in Claim 1, wherein the control means controls a gain of the servo-error signal formed by the servo-error signal processing means at the time of playing back data from the disc recording medium.

By the disc apparatus of the invention described in Claim 5, the gain of the servo-error signal formed on the basis of the amount of received light of the reflected light received by the light receiving means is controlled at data playback time. Thus, it is possible to form the servo-error signal properly, to correctly trace the track by the laser light, and to correctly read data recorded on the disc recording medium even at the time of the occurrence of dew condensation.

By this invention, it is possible to improve the reliability of the recording processing and the playback processing in a dew-condensation state without changing or adding the known hardware configuration by supplementing the shortage of the amount of servo-return light (the amount of reflected light) and the shortage of the laser power necessary for recording, which are caused by a disc recording medium (recording medium) at dew-condensation time and a misted objective lens of the optical pickup.

Brief Description of the Drawings

[Fig. 1] Fig. 1 is a block diagram for illustrating an imaging apparatus to which an embodiment of this invention is applied.

[Fig. 2] Fig. 2 is a block diagram for illustrating a disc drive of the imaging apparatus shown in Fig. 1.

[Fig. 3] Fig. 3 is a block diagram for illustrating mainly an optical pickup portion of the disc drive shown in Fig. 2.

[Fig. 4] Fig. 4 is a flowchart for illustrating the operation of the disc drive shown in Fig. 2.

[Fig. 5] Fig. 5 is a diagram for illustrating laser power at the time of recording processing.

Best Mode for Carrying Out the Invention

In the following, a description will be given of an embodiment of an apparatus and method according to this invention with reference to the drawings. In the embodiment described in the following, a description will be given by taking, as an example, the case where this invention is applied to a disc drive of an imaging apparatus (digital video camera) capable of capturing moving images and still images using a small-sized DVD capable of recording as a recording medium.

[About Configuration of Imaging Apparatus and Basic Operations]

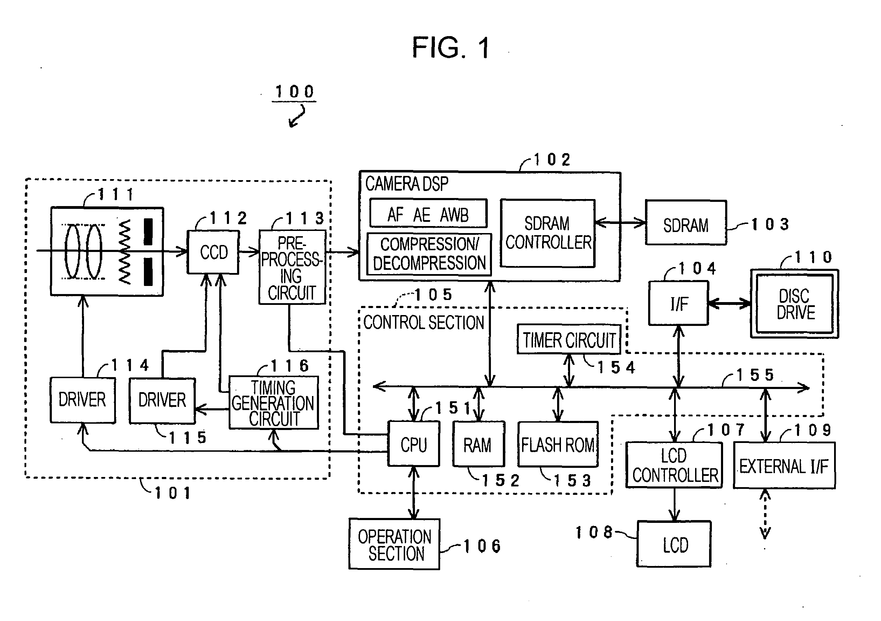

Fig. 1 is a block diagram for illustrating an imaging apparatus 100 of this embodiment. As shown in Fig. 1, the imaging apparatus 100 of this embodiment includes, by being roughly divided, a camera section 101, a camera DSP (Digital Signal Processor) 102, an SDRAM (Synchronous Dynamic Random Access Memory) 103, a host interface (in the following, referred to as a host I/F) 104, a control section 105, an operation section 106, an LCD (Liquid Crystal Display) controller 107, an LCD 108, an external interface (in the following, referred to as an external I/F) 109. Also, a disc drive 110 is connected to the imaging apparatus 100 through the host I/F 104.

As described above, the disc drive 110 is a section to use a small-sized DVD capable of recording as a recording medium to record data on the DVD, and to perform processing such as reading the data recorded on that DVD for playing back. In this regard, a detailed description will be given of the disc drive 110 later.

As shown in Fig. 1, the camera section 101 includes an optical block 111, a CCD (Charge Coupled Device) 112, a pre-processing circuit 113, an optical block driver 114, a CCD driver 115, and a timing generation circuit 116. Here, the optical block 111 includes a lens, a focus mechanism, a shutter mechanism, an aperture (iris) mechanism, etc.

Also, the control section 105 is a microcomputer constituted by connecting a CPU (Central Processing Unit) 151, a RAM (Random Access Memory) 152, a flash ROM (Read Only Memory) 153, a timer circuit 154 through a system bus 155, and is capable of controlling each section of the imaging apparatus of this embodiment.

Here, the RAM 152 is used mainly for working areas, such as for temporarily storing an intermediate result of the processing. Also, the flash ROM 153 stores various programs to be executed in the CPU 151, the data necessary for the processing, etc. Also, the timer circuit 154 can provide the current date, the current day of the week, the current time, and at the same time, the date and time of shooting, etc.

When an image is captured, the optical block driver 114 forms a drive signal for operating the optical block 111 under the control of the control section 105, and supplies this to the optical block 111 to operate the optical block 111. In the optical block 111, the focus mechanism, the shutter mechanism, and the aperture mechanism are controlled in response to the drive signal from the driver 114, and the optical block 111 captures an image of an object of shooting, and provides this to the CCD 112.

The CCD 112 performs photo-electric conversion on the image from the optical block 111, and outputs it. The CCD 112 operates in response to the drive signal from the CCD driver 115, captures the image of the object of shooting from the optical block 111, and supplies the image (image information) of the captured object of shooting to the pre-processing circuit 113 as an electronic signal on the basis of the timing signal from the timing generation circuit 116 controlled by the control section 105.

In this regard, as described above, the timing generation circuit 116 forms a timing signal for providing a predetermined timing under the control of the control section 105. Also, the CCD driver 115 forms a drive signal to be supplied to the CCD 112 on the basis of the timing signal from the timing generation circuit 116.

The pre-processing circuit 113 performs CDS (Correlated Double Sampling) processing on the image information of the electronic signal supplied thereto so as to keep the S/N ratio favorable, performs AGC (Automatic Gain Control) processing to control the gain, and performs A/D (Analog/Digital) conversion to form image data, which has been changed into a digital signal.

The image signal, which has been changed into a digital signal from the pre-processing circuit 113, is supplied to the DSP 102. The DSP 102 performs camera-signal processing, such as AF (Auto Focus), AE (Auto Exposure), AWB (Auto White Balance), etc., on the image data supplied thereto. The image data, which has been subjected to various adjustments in this manner, is subjected to data compression by a predetermined compression method, and is recorded into a small-sized DVD loaded in the disc drive 110 of the imaging apparatus 100 of this embodiment through the system bus 155 and the host I/F 104.

Also, the targeted image data of the image data recorded in the DVD loaded in the disc drive 110 is read from the DVD loaded in the disc drive through the host I/F 104 in accordance with the user's operation input accepted through the operation section 106 including a touch panel, control keys, etc., and is supplied to the DSP 102.

The DSP 102 performs decompression processing (expansion processing) of the data compression on the data-compressed image data, which has been read from the DVD loaded in the disc drive 110 and supplied through the host I/F 104, and supplies the image data after decompression to the LCD controller 107 through the system bus 155. The LCD controller 107 forms an image signal to be supplied to the LCD 108 from the image data supplied thereto. Thus, the image in accordance with the image data recorded in the DVD loaded in the disc drive 110 is displayed on the display screen of the LCD 108.

In this regard, the display pattern of the image follows the display processing program recorded in the ROM. That is to say, this display processing program is a program indicating a mechanism in which the file system is recorded and how the image is played back.

Also, the imaging apparatus 100 of this embodiment is provided with the external I/F 109. The imaging apparatus 100 can be connected to, for example an external personal computer through the external I/F 109, receive the supply of image data from the personal computer, and record the data in the DVD loaded in the disc drive 110. Also, the imaging apparatus 100 can supply the image data recorded in the DVD loaded in the disc drive 110 to an external personal computer, etc.

Also, it is possible to connect to a network, for example the Internet, etc., by connecting a communication module to the external I/F 109, to obtain various image data and the other information through the network, and to record the data in the DVD loaded in the disc drive 110. Alternatively, it is also possible to transmit the data recorded in the DVD loaded in the disc drive 110 to the intended destination through the network.

Also, it is, of course, possible for the imaging apparatus 100 of this embodiment to read and play back the image data, etc., obtained through an external personal computer and a network, and recorded in the DVD loaded in the disc drive 110 as described above, and to display the data on the LCD 108 to be used by the user.

In this regard, the external I/F 109 can be provided as a wired interface, such as IEEE (Institute of Electrical and Electronics Engineers) 1394, USB (Universal Serial Bus), etc., and can also be provided as a radio interface by light or a radio wave. That is to say, the external I/F 109 may be either a wired or radio interface.

In this manner, it is possible for the imaging apparatus 100 of this embodiment to capture the image of an object of shooting, to record the image in the DVD, which is a recording medium, loaded in the disc drive 110 of the imaging apparatus 100, and to read the image data recorded in the DVD to play back this for use. Also, it is possible to receive the supply of image data through an external personal computer and a network, to record this in the DVD loaded in the disc drive 110, and to read and play back this.

Also, the imaging apparatus 100 is often carried and used. Thus, the use environment might be changed suddenly, and dew condensation might occur in the disc drive 110. For example, when the imaging apparatus 100 is used out of doors in the midsummer heat and then is brought into an air-conditioned building to be used, or on the contrary, when the imaging apparatus 100 is used in an air-conditioned building and then is brought outdoors in the midsummer heat to be used, dew condensation may occur in the disc drive 110, and thus a normal operation may not be carried out.

Also, the same thing can be said for the case where the imaging apparatus 100 is brought out from a heated room to the outside of the building during the cold season to be used, and the case where the apparatus is brought into a heated room to be used from the outside of the building during the cold season. That is to say, when a certain degree of sudden change in temperature occurs on the imaging apparatus 100, dew condensation may occur in the disc drive 110.

Thus, in the disc drive 110 of the imaging apparatus 100 of this embodiment, it has become possible to detect the occurrence of dew condensation. When the occurrence of dew condensation is not detected, the amount of reflected light of the playback laser light at normal time (the laser light of playback power) is measured. When the occurrence of dew condensation is detected, the amount of reflected light of the playback laser light at dew-condensation time is measured. On the basis of this, it is possible to always adjust the recording of data and the playback of data by controlling the laser power of the laser light used at recording processing time and the laser light used at playback processing time, and by controlling the gain of the servo-error signal formed in accordance with the reflected light of the laser light from the DVD, which is a disc recording medium.

[About configuration and operation of disc drive 110]

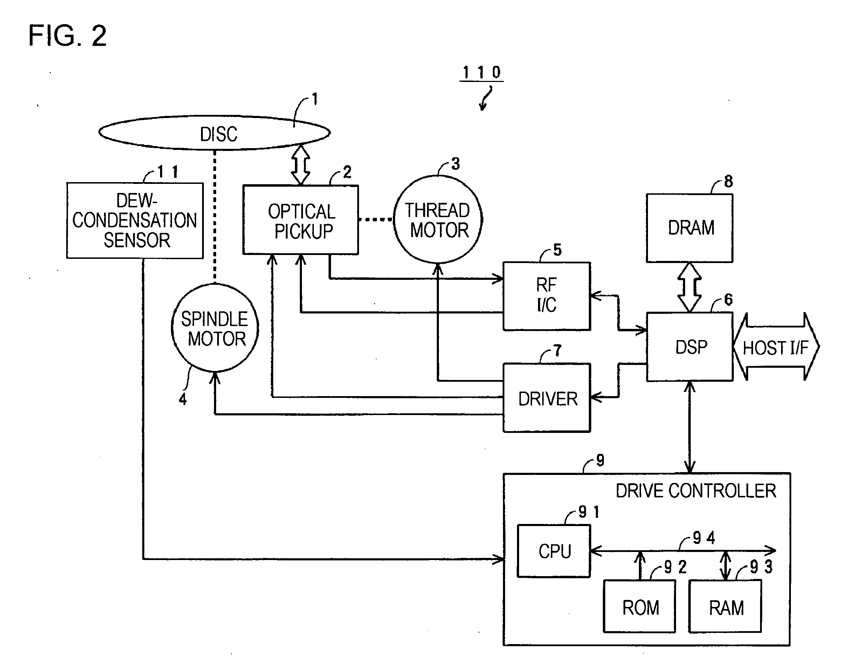

Fig. 2 is a block diagram for illustrating the disc drive 110 of the imaging apparatus 100 of this embodiment. In Fig. 2, reference numeral 1 denotes a DVD, which is a disc recording medium loaded in the disc drive 110. In this regard, in the following, the DVD loaded in the disc drive 110 is described as a disc 1.

As shown in Fig. 2, the disc drive 110 includes an optical pickup 2, a thread motor 3, a spindle motor 4, an RFIC (high-frequency wave signal processing circuit) 5, a DSP 6, a driver (drive circuit) 7, a DRAM (Dynamic Random Access Memory) 8, and a drive controller 9.

The optical pickup 2, which will also be described below, includes a laser diode, which is the light source of the laser light to be emitted on a disc, an objective lens, an optical detector, such as a photo-detector, which receives laser light from the disc, a focus coil constituting a bi-axial actuator, a tracking coil, etc. The optical pickup 2 emits laser light of playback power to read the data recorded on the disc by receiving the reflected light, and also emit laser light of recording power on the disc in accordance with the recording data to record the data on the disc.

The thread motor 3 is for moving the optical pickup 2 in the radial direction of the disc, and the spindle motor 4 is for driving the disc to rotate. Also, the RFIC 5 generates a playback signal (Pull-in signal), a focus-error signal FE, and a tracking error signal TE in accordance with the reflected light from the disc on which the laser light is emitted, and supplies a drive signal for driving the laser light source to the laser light source.

The DSP 6 performs various signal processing, such as forming the drive signal to be supplied to the driver in accordance with the focus-error signal FE and the tracking error signal TE, forming the playback signal to be supplied from the playback signal from the RFIC 5 to the control section 105 side of the imaging apparatus 100 at playback time, and forming the laser drive signal in accordance with the recording data at recording time, etc.

The driver 7 forms and supplies drive signals to the optical pickup 2, the thread motor 3, and the spindle motor 4, respectively in accordance with each of them. Also, the DRAM 8 temporarily stores data to be processed at playback time and at recording time. Also, as shown in Fig. 2, the drive controller 9 is a microcomputer formed by connecting the CPU 91, the ROM 92, and the RAM 93 through the bus 94, and controls each part of the disc drive 110.

The disc drive 110 performs operation in accordance with the command issued from the control section 105 of the imaging apparatus 100 through the host I/F 104. The control section 105 of the imaging apparatus 100 is positioned as a host apparatus of the disc drive 110. In the following, the control section 105 of the imaging apparatus 100 is simply referred to as a host.

A command from the host is recognized by the drive controller 9 through the register of the DSP 6. For example, in the case of playback, the read command (Read Command) from the host is used as a trigger, the disc controller 9 sends an appropriated command to the RFIC 5 through the DSP 6 and the DSP 6 to control the optical pickup 2, the thread motor 3, and the spindle motor 4.

In this case, laser light is turned on with the playback power, the optical pickup 2 is moved to the address specified by the host to capture (read) data. The captured data is once transferred from the RFIC 5 to the DRAM 8 through the DSP 6, and sequentially transferred to the host from the DSP 6 through the host I/F 104.

Also, in the case of recording, on the contrary, the data transferred from the host is once input into the DRAM 8 and temporarily stored. The drive controller 9 outputs an instruction to the optical pickup 2 through the DSP 6 to move the optical pickup 2 to the address on the disc specified by the host. The drive controller 9 issues a transfer-start command to the DSP 6.

In response to this, the DSP 6 reads the recording data from the DRAM 8, and converts this into a laser drive signal. The DSP 6 changes the laser to be emitted from the laser light source to have the recording power at proper timing through the RFIC 5, and at the same time, drives the laser light source by the previous drive signal formed in accordance with the recording data to record the recording data on the disc 1.

A dew-condensation sensor 11 detects the occurrence of the dew condensation. The dew-condensation sensor 11 has a characteristic of changing its impedance when moisture adheres to this, and converts the impedance into a voltage, and supplies the voltage to the drive controller 9. The drive controller 9 determines whether dew condensation has occurred by numerically expressing the detection output from the dew-condensation sensor 11 by an internal AD converter (not shown in the figure) and comparing the value with a predetermined value. In this regard, when the dew-condensation sensor 11 does not detect dew condensation, and a predetermined time has passed since the detection of the last occurrence of dew condensation, it is determined to be the termination of dew condensation.

[About laser drive system and servo system]

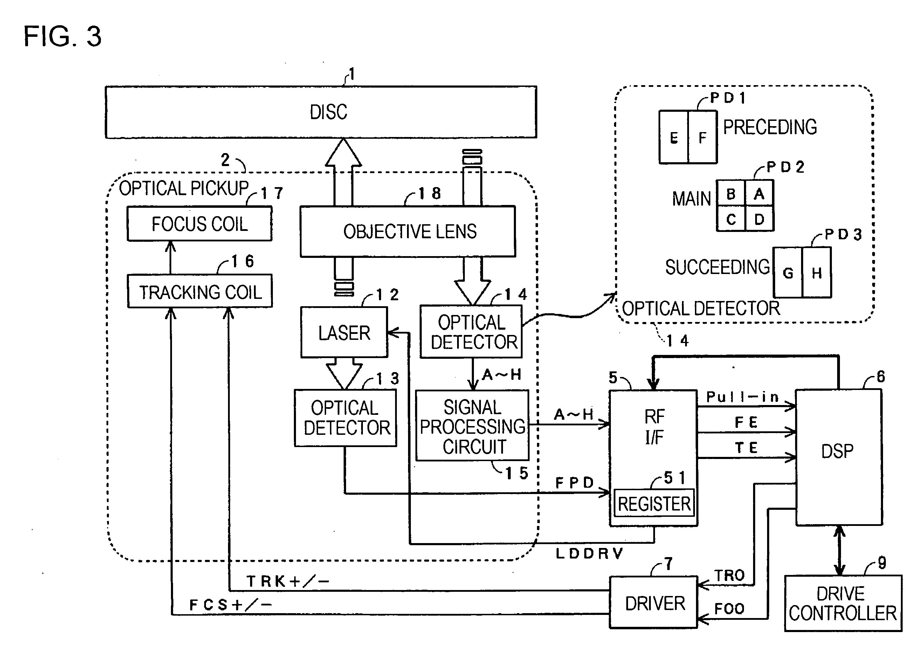

Next, a description will be given of a laser drive system and a servo system of the disc drive 110 using Fig. 3. As described above and as shown in Fig. 3, the optical pickup 2 includes a laser light source 12, optical detectors 13 and 14, a signal processing circuit 15, a tracking coil 16, and a focus coil 17.

The optical pickup 2 of this embodiment uses a so-called three-beam method in which a groove (track) on a disc is traced (scanned) by three light beams, namely, a main light beam, a preceding light beam for tracing the preceding position to the main light beam, a succeeding light beam for scanning the succeeding position to the main light beam. Accordingly, as shown at the right upper side of Fig. 3 by surrounding by a dotted line, the optical detector 14 includes three photo-detectors PD1, PD2, and PD3.

Here, the photo-detector PD1 is a detector divided into two areas E and F, which receives the light reflected from the disc of the preceding light beam, the photo-detector PD2 is a detector divided into four areas A, B, C and D, which receives the light reflected from the disc of the main light beam, and the photo-detector PD3 is a detector divided into two areas G and H, which receives the light reflected from the disc of the succeeding light beam.

In order to read data from the disc 1 or to write data onto the disc, it is necessary to rotate the disc at a predetermined speed, to focus the objective lens of the optical pickup 2 on a medium, to move the optical pickup to a predetermined position, and to trace the mark created by recording or the track formed on the disc in advance using the laser light with proper laser power.

The servos (automatic control systems) for correctly controlling a drive include a focus servo for focusing laser light on the disc surface, a tracking servo for tracing laser light on the disc track, a spindle servo for controlling the spindle motor to rotate the disc at a predetermined speed, and a thread servo for controlling the thread motor 3 to move the optical pickup 2 in the radial direction of the disc. The focus servo and the tracking servo perform the control by driving the focus coil 17 and the tracking coil 16 in the optical pickup 2.

First, a description will be given of the servo operations by taking the focus servo for example. In the focus servo, when the objective lens 18 is farther than the focal point, it is necessary to drive the objective lens 18 in the direction of bringing the objective lens 18 closer to the disc. When the objective lens 18 is nearer than the focal point, it is necessary to drive the objective lens 18 in the direction of bringing the objective lens 18 farther from the disc.

Thus, the RFIC 5 forms the focus-error signal FE, which is a positive value when the objective lens 18 is nearer to the disc than the focal point, and is a negative value when the objective lens 18 is farther from the disc than the focal point, using the signal output from the optical detector 4 in accordance with the expression (1) shown below.

$$FE = (B + D) - (A + C) \quad \dots (1).$$

This focus-error signal FE is supplied to the DSP 6, is amplified with a predetermined gain (gain), and this is supplied to the driver 7 as a signal FOO. The driver 7 forms a drive signal FCS+/- for driving the focus coil 17 from the signal FOO, and supplies this to the focus coil 17. Thus, when the output (drive signal to the focus coil 18) from the driver 7 is negative, the objective lens 18 is driven in the direction of being moved nearer to the disc 1, and when it is positive, the objective lens 18 is driven in the direction of being moved farther from the disc 1. As a result, the servo is applied such that the focus-error signal FE becomes 0, and thus it is possible to maintain to be in focus.

In this regard, if the gain is smaller than a proper value, it is not possible to maintain to be in focus, whereas if it is too high, it goes into an oscillation state, and it becomes difficult to converge to a focal point. Thus, in general, the setting of a proper gain is carried out at the time when the disc is loaded in the disc drive 110. The adjustment is performed such that a sine-wave signal output from the DSP 6 in a state of applying servo with a rough setting of the gain returns an error signal having a predetermined amplitude. The gain of the servo is set by the drive controller 9 setting a value in the internal register of the DSP 6.

In the same manner for the tracking servo, the RDIC 5 forms the tracking error signal TE using the signal output from the optical detector 4 in accordance with the following (2) expression.

$$TE = (A + D) - (B + C) - \alpha^* ((E - F) + (G - H)) \quad \dots (2)$$

By applying servo such that this tracking error signal becomes "0 (zero)", it is possible for the main laser light to correctly trace the center of the track on the disc 1. In this regard, here, $\alpha$ is a coefficient to be determined by adjustment. Also, the sign "*" denotes a multiplication sign.

That is to say, the tracking error signal TE formed by the RFIC 5 is supplied to the DSP 6, is amplified with a predetermined gain (gain) here, and this is supplied to the driver 7 as a signal TRO. The driver 7 forms a drive signal TRK+/- for driving the tracking coil 16 from the signal TRO, and supplies this to the tracking coil 16. By this means, it is possible for the laser light to correctly trace on the track of the disc 1.

At the same time, the setting of the laser power is carried out by the drive controller 9 by setting a value in the internal register of the RFIC 5 through the DSP 6. As shown in Fig. 3, the RFIC 5 has a register 51 for setting the laser powers for playback and recording, and can change the laser power in accordance with the setting of the recording/playback mode from the DSP 6.

The RFIC 5 outputs a drive signal LDDRV to the laser light source 12 on the basis of the set value indicating the laser power. The laser power varies depending on the surrounding temperature circumstances. Thus, the light detector 13 receives the reflected light of the laser light from the disc 1, and supplies the amount of received light FPD to the RFIC 5. By this means, the RFIC 5 controls the drive signal LDDRV to be supplied to the laser light source 12 such that the amount of received light of the reflected light FPD of the laser light from the disc 1 becomes constant (such that the output from the light detector 13 becomes constant).

For example, if the playback laser power is smaller than a proper value, the RF signal becomes small, and thus the reliability of read data becomes low and the servo signal becomes small. Accordingly, the servo becomes unstable. Also, if the laser power at recording time is smaller than a proper value, the servo becomes unstable in the same manner as the playback time, and the energy necessary for recording cannot be supplied sufficiently. Accordingly, it becomes not possible to carry out recording normally.

Thus, in the disc drive 110 of the imaging apparatus of this embodiment, the optimum value of the playback laser power is determined in advance and is set in the register 51 of the RFIC 5. The optimum value of the recording laser power is determined by so-called trail writing immediately before the recording and is set in the register 51 of the RFIC 5.

Incidentally, even the optimum values at normal time of the playback laser power of the laser light and the recording laser power are determined to be correct, as also described above, when dew condensation has occurred in the disc drive 110 of the imaging apparatus 100, the surface of the loaded disc becomes misty, or the objective lens becomes misty. Thus, there might cause problems in that the reliability of read data becomes low, the servo control becomes unstable, and the reliability of recording data becomes low, and so on.

Accordingly, in the disc drive 110 of the imaging apparatus 100 of this embodiment, measurements are made of the amount of light of the laser light reflected from the disc at normal time (the amount of reflected light at normal time) when the dew-condensation sensor 11 has not detected the occurrence of dew condensation (when the dew condensation has not occurred).

When the dew-condensation sensor 11 has detected the occurrence of dew condensation (when dew condensation has occurred), measurements are made of the amount of light (the amount of reflected light at dew-condensation time) of the laser light reflected from the disc at dew-condensation time. It is possible to adjust the laser power and the gain of the servo (the gain of the servo-error signal) on the basis of the amount of reflected light at dew-condensation time and the amount of reflected light at normal time, and to carry out the playback and the recording of data with high reliability and high stability.

In this regard, in the imaging apparatus 100 of this embodiment, for the detection of the amount of reflected light at normal time and at dew-condensation time, the sum signal (Pull-in) of the areas A to D out of the outputs of the optical detector 14 is used. This signal is calculated in the RFIC 5, and the drive controller 9 can read its value through the DSP 6.

[About adjustment processing of laser power and servo gain at dew-condensation time]

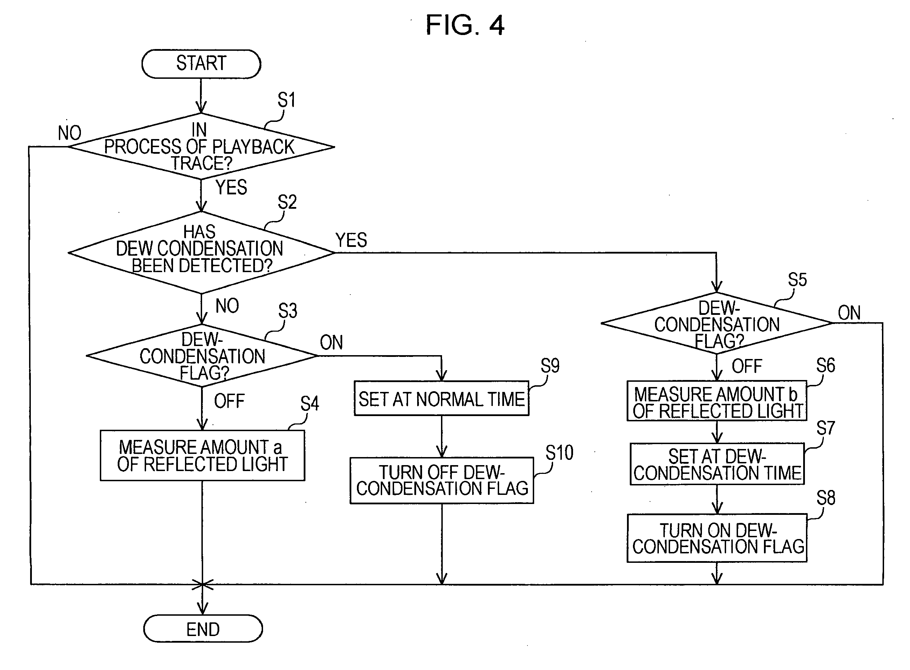

Fig. 4 is a flowchart for illustrating the adjustment processing of laser power and servo gain performed in the drive controller 9 of the disc drive 110 of the imaging apparatus 100 of this embodiment. The processing (task) shown in Fig. 4 is shown on the assumption that only the adjustment processing portion of the laser power and the servo gain are executed at regular intervals by predetermined timing. Accordingly, the control of the usual drive operation is performed by another task.

When the processing shown in Fig. 4 is executed in the drive controller 9, the drive controller 9 first determines whether playback trace is in progress (step S1). The disc drive 110 operates in response to a request from the host side, and thus the drive controller 9 recognizes the operation state in which the disc drive 110 is running.

In the determination of step S1, when it is determined that recording is in progress or track jumping is in progress, the amount of reflected light cannot be measured stably, and thus the processing is terminated without measuring. In the determination of step S1, when it is determined that playback tracing is in progress, the drive controller 9 determines whether dew condensation has occurred (step S2) on the basis of the output from the dew condensation sensor 11.

In the determination of step S2, when it is determined that dew condensation does not occur, the drive controller 9 checks the dew-condensation flag (step S3). In the checking processing of step S3, when the dew-condensation flag is off, that is to say, when the change is not from the state in which dew condensation has occurred to the state in which dew condensation does not occur, but dew condensation has not occurred continuously, the amount a of reflected light at normal time is measured (step S4). Then, the processing shown in Fig. 4 is terminated.

In this regard, the measurement of the amount a of reflected light at normal time in step S4 may be carried out several times at regular time intervals and averaged, or may be averaged using the measurement results of a few times before. When the averaged amount of reflected light at normal time is used, for example, if the amount a of reflected light at normal time is accidentally large or small by some cause, it is possible to prevent using such an abnormal value as the amount a of reflected light at normal time without change.

Also, in the determination of step S2, when it is determined that dew condensation occurs, the drive controller 9 checks the dew-condensation flag (step S5). In the checking processing of step S5, when the dew-condensation flag is on, dew condensation has occurred continuously from the previous detection. Thus, the processing at dew-condensation occurrence time is not performed repeatedly, and the processing shown in Fig. 4 is terminated.

In the checking processing of step S5, when the dew-condensation flag is off, the change is from the state in which dew condensation has not occurred to the state in which dew condensation occurs (since this is the first processing after the detection of dew condensation), the drive controller 9 measures the amount b of reflected light at dew-condensation time (step S6). The drive controller 9 executes the processing (step S7) to set (adjust) one of or both of the laser power and the servo gain on the basis of the amount b of reflected light at dew-condensation time measured in step S6, and the amount a of reflected light at normal time measured in step S4. After this, the dew-condensation flag is turned on, and the processing shown in Fig. 4 is terminated.

Also, in the checking processing of step S3, when the dew-condensation detection flag is on, the change is from the state in which dew condensation has occurred to the state in which dew condensation does not occur (since this is the first processing after the termination of dew condensation), in response to the processing in step S7, one of or both of the laser power and the servo gain is returned to the setting at normal time (step S9), the dew-condensation flag is turned off (step S10), and the processing shown in Fig. 4 is terminated.

[About setting processing at dew-condensation time in step S7]

As also described above, in step S7, the processing to set (adjust) one of or both of the laser power and the servo gain is performed. Specifically, the processing is performed as below.

That is to say, for the recording processing, either the next (A) or (B) is performed.

    (A) To increase the recording laser power, and increase the playback laser power.
    (B) To increase the recording laser power, and increase the servo gain.
    Also for the playback processing, the processing of either the next (C) or (D) is performed.
    (C) To increase the playback laser power.
    (D) To increase the servo gain.

Accordingly, in the setting processing at dew-condensation time of step S7, it is necessary to determine whether to use the above-described (A) or (B) for the recording processing, and to determine whether to use the above-described (C) or (D) for the playback processing. For a combination, the processing should be performed by either one of the combinations "(A) and (C)", "(A) and (D)", "(B) and (C)", and "(B) and (D)".

When the processing of "(A) and (C)" is performed, it is not necessary to adjust the servo gain. In other cases, it is necessary to adjust both the laser power and the servo gain. In the above-described (A), at recording processing time, the adjustment to increase not only the recording laser power, but also the playback laser power is because, as is also described below, the recording laser power is the laser power at pit-formation time, and the playback laser power is the laser power at non-pit-formation time. Thus, it becomes not possible to perform the focus servo and the tracking servo properly unless the individual adjustments are properly performed at recording processing time when dew condensation has occurred.

The laser power and the servo gain is specifically determined as follows. First, for the servo gain, assuming that the servo gain at normal time is G1, the amount of reflected light is a, and the amount of reflected light at dew-condensation time is b, the servo gain G2 at dew-condensation time follows the below expression (3).

$$\text{The servo gain G2 at dew-condensation time} = M*(a/b)$$

$$*G1 \quad \dots (3)$$

In this regard, the character M in the expression (3) is an appropriate coefficient of one or less, the sign "*" is used as a multiplication sign, and the sign "/" is used as a division sign. Also, the servo gain G2 may be determined to have an upper limit in order not to have a certain value or more.

Also, for the laser power, the recording laser power Pwd at dew-condensation time, the playback laser power Prd at dew-condensation time, and the erasing laser power Ped at dew-condensation time are obtained by following the below expressions (4), (5), and (6) using the recording laser power Pw at normal time, the playback laser power Pr at normal time, the erasing laser power Pe at normal time, the amount a of reflected light, and the amount b of reflected light at dew-condensation time.

$$\text{The recording laser power Pwd at dew-condensation time}$$

$$= N * (a/b) *Pw \quad \dots (4)$$

$$\text{The playback laser power Prd at dew-condensation time} =$$

$$N * (a/b) *Pr \quad \dots (5)$$

$$\text{The erasing laser power Ped at dew-condensation time} =$$

$$N * (a/b) *Pe \quad \dots (6)$$

In this regard, in the expressions (4), (5), and (6), the character N is an appropriate coefficient of one or less, the sign "*" is used as a multiplication sign, and the sign "/" is used as a division sign.

Also, the recording laser power Pwd at dew-condensation time to be used at recording processing time, the playback laser power Prd at dew-condensation time, and the erasing laser power Ped at dew-condensation time, which are obtained by the expressions (4), (5), and (6), may be individually determined to have an upper limit in order not to have a certain value or more.

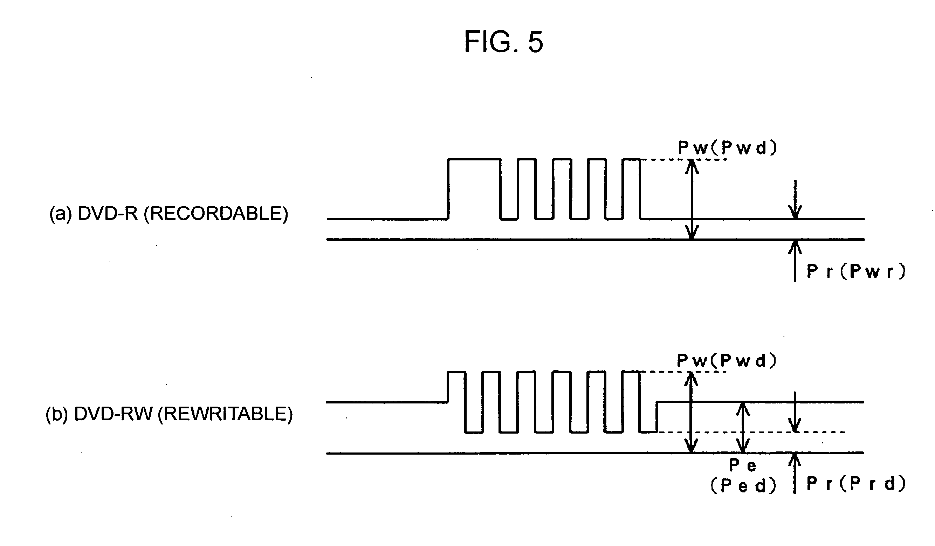

Fig. 5 is a diagram for illustrating a laser waveform (recording laser waveform) to be used at the time of the recording processing. Fig. 5(a) shows the case where a disc recording medium to be used is a recordable DVD (DVD-R), and Fig. 5(b) shows the case where a disc recording medium to be used is a rewritable DVD (DVD-RW).

As shown in Fig. 5(a), in the case of a recordable disc recording medium (DVD-R), data is recorded using the repetition pulses of the recording laser power Pw and the playback laser power Pr. As is also described above, when only the laser power is adjusted at the recording processing time at dew-condensation time, it is possible to record data properly and to apply the servo properly by adjusting both of the recording laser power and the playback laser power, for example, the recording laser power (Pwd) at dew-condensation time and the playback laser power (Prd) at dew-condensation time.

Also, as shown in Fig. 5(b), in the case of a rewritable disc recording medium (DVD-RW), the portion on which a mark for recording data is formed is recorded by the repetition pulses of the recording laser power (Pw) and the playback laser power (Pr), and the portion on which the mark for recording data is not formed is recorded by erasing power (Pe).

When only the laser power is adjusted at the recording processing time at dew-condensation time, it is possible to record data properly and to apply the servo properly by adjusting the erasing power (Ped) at dew-condensation time in addition to adjusting the recording laser power (Pwd) at dew-condensation time and the playback laser power (Prd) at dew-condensation time. When a rewritable disc recording medium is used, the erasing laser power is also adjusted.

In this manner, when the reading of data and various servos are properly carried out by adjusting only the laser power without adjusting the servo gain at recording processing time, all the laser power to be used should be adjusted on the basis of the amount of reflected light a at normal time and the amount of reflected light b at dew-condensation time.

Also, when the reading of data and various servos are properly carried out by adjusting only the laser power without adjusting the servo gain at playback processing time, only the playback laser power should be adjusted on the basis of the amount a of reflected light and the amount b of reflected light at dew-condensation time.

Also, when various servos are properly performed by adjusting the servo gain, it is not necessary to increase the playback laser power both at recording processing time and at playback processing time.

In this manner, at dew-condensation occurrence time, by controlling one of or both of the laser power and the servo gain on the basis of the amount of reflected light at normal time and the amount of reflected light at dew-condensation time, it is also possible to properly record data onto the disc 1 and play back data from the disc 1 at dew-condensation occurrence time.

Also, even when the laser power is adjusted to be increased, by setting the values of the coefficients M and N, and the upper limit values it is not necessary to emit laser power of an unnecessarily high level onto the disc, and thus the disc is not damaged.

In this regard, in the above-described embodiment, a description has been given by taking as an example, the case where this invention is applied to a disc drive having an optical pickup using a three-beam method. However, the present invention is not limited to this. This invention can be applied to the case using an optical pickup of one-beam method. In such a case, only the calculation of the servo-error signal is different.

Also, in the above-described embodiment, a description has been given by taking as an example, the case of the disc drive of an imaging apparatus. However, the present invention is not limited to this. This invention can be applied to various electronic systems including a disc driver using a disc recording medium as a recording medium, such as a playback apparatus using a disc recording medium, a recording apparatus, a recording/playback apparatus, etc.

Also, this invention can be applied to various electronic systems including a disc driver having a possibility of the occurrence of dew condensation in the loaded disc drive according to the surrounding environment, such as a mobile type, an installed type, an in-vehicle type, etc.

Also, when this invention is applied to a playback apparatus using a disc recording medium, it is not necessary to consider recording processing, and thus it is possible to properly continue playback processing at dew-condensation time either by increasing the playback laser power or increasing the servo gain at dew condensation time. Of course, it is possible to carry out both of them.

Accordingly, in various electronic systems having a disc drive, it should be determined whether one of the laser power and the servo gain is adjusted or both of them are adjusted in accordance with the functions of themselves.

**Claims**

1. A disc apparatus comprising:

    a laser light source for generating laser light to be emitted on a disc recording medium;
    driving means for driving the laser light source;
    light receiving means for receiving the laser light emitted from the laser light source reflected from the disc recording medium;
    servo-error signal processing means for forming one servo-error signal or more on the basis of the amount of receiving light of the reflected light received by the light receiving means;
    dew-condensation detecting means for detecting the occurrence of dew condensation in the apparatus;
    when the occurrence of dew condensation is not detected by the dew-condensation detecting means, first measuring means for measuring the amount of reflected light at normal time by the light receiving means;
    when the occurrence of dew condensation is detected by the dew-condensation detecting means, second measuring means for measuring the amount of reflected light at dew-condensation time by the light receiving means; and
    when the occurrence of dew condensation is detected by the dew-condensation detecting means, control means for controlling one of or both of the driving means and the servo-error signal processing means on the basis of the amount of reflected light at normal time from the first measuring means and the amount of reflected light at dew-condensation time from the second measuring means.

2. The disc apparatus according to Claim 1,
    wherein the control means adjusts laser power at pit-formation time of the laser light emitted from the laser light source to the disc recording medium and laser power at non-pit-formation time by controlling the driving means at the time of recording data on the disc recording medium.

3. The disc apparatus according to Claim 1,
    wherein the control means adjusts laser power at pit-formation time of the laser light emitted from the laser light source to the disc recording medium and controls a gain of the servo-error signal formed by the servo-error signal processing means by controlling the driving means and the servo-error signal processing means at the time of recording data on the disc recording medium.

4. The disc apparatus according to Claim 1,
    wherein the control means adjusts laser power of the laser light emitted from the laser light source to the disc recording medium by controlling the driving means at the time of playing back data from the disc recording medium.

5. The disc apparatus according to Claim 1,
wherein the control means controls a gain of the servo-error signal formed by the servo-error signal processing means at the time of playing back data from the disc recording medium.

6. A method of controlling operation in a disc apparatus for forming a playback signal and one kind or more of servo-error signal by emitting laser light onto a disc recording medium and receiving the reflected light thereof, the method comprising the steps of:

dew-condensation detecting for detecting the occurrence of dew condensation in the apparatus;
first measuring for measuring the amount of reflected light at normal time, the amount of received light of the reflected light from the disc recording medium when the occurrence of dew condensation is not detected by the dew-condensation detecting step;
second measuring for measuring the amount of reflected light at dew-condensation time, the amount of received light of the reflected light from the disc recording medium when the occurrence of dew condensation is detected by the dew-condensation detecting step; and
controlling for controlling one of or both of the laser power of the laser light emitted on the disc and a gain of one kind or more of the servo-error signal formed on the basis of the amount of reflected light at normal time measured by the first measuring step and the amount of reflected light at dew-condensation time measured by the second measuring step when the occurrence of dew condensation is detected by the dew-condensation detecting step.

7. The method of controlling operation in a disc apparatus according to Claim 6,
wherein the controlling step controls to adjust the laser power at pit-formation time of the laser light emitted onto the disc recording medium used at the time of recording data on the disc recording medium and the laser power at non-pit-formation time.

8. The method of controlling operation in a disc apparatus according to Claim 6,
wherein the controlling step controls laser power of the laser light at pit-formation time emitted onto the disc recording medium used at the time of recording data on the disc recording medium and controls a gain of the servo-error signal formed in accordance with the reflected light of the laser light from the disc recording medium.

9. The method of controlling operation in a disc apparatus according to Claim 6,
wherein the controlling step controls laser power of the playback laser light emitted onto the disc recording medium used at the time of playing back data from the disc recording medium.

10. The method of controlling operation in a disc apparatus according to Claim 6,
wherein the control step controls a gain of a servo-error signal formed in accordance with the reflected light of the laser light from the disc recording medium used at the time of playing back data from the disc recording medium.

## FIG. 1

100

**CAMERA DSP** — 102
- AF AE AWB
- COMPRESSION/DECOMPRESSION
- SDRAM CONTROLLER

SDRAM — 103

111
112 CCD
113 PRE-PROCESSING CIRCUIT

I/F — 104
DISC DRIVE — 110

114 DRIVER
115 DRIVER
116 TIMING GENERATION CIRCUIT

101

**CONTROL SECTION** — 105
TIMER CIRCUIT — 154
CPU — 151
RAM — 152
FLASH ROM — 153

155

LCD CONTROLLER — 107
EXTERNAL I/F — 109

OPERATION SECTION — 106

108 — LCD

EP 1 777 704 A1

FIG. 2

EP 1 777 704 A1

# FIG. 3

# FIG. 4

```
                        ┌─────────┐
                        │  START  │
                        └────┬────┘
                             │            S1
                             ▼
            NO        ╱ IN PROCESS  ╲
      ◄───────────── ╱ OF PLAYBACK  ╲
                     ╲   TRACE?      ╱
                      ╲             ╱
                         │ YES
                         │            S2
                         ▼
                ╱   HAS          ╲      YES
               ╱ DEW CONDENSATION ╲ ──────────────────────┐
               ╲ BEEN DETECTED?   ╱                        │
                ╲                ╱                         │
                   │ NO                                    ▼            S5
                   │      S3                        ╱   DEW-      ╲      ON
                   ▼                               ╱ CONDENSATION  ╲ ────────┐
            ╱   DEW-      ╲    ON                  ╲   FLAG?       ╱         │
           ╱ CONDENSATION  ╲ ───────┐              ╲             ╱          │
           ╲   FLAG?       ╱        │                 │ OFF      S6         │
            ╲             ╱         │                 ▼                     │
               │ OFF   S4           ▼    S9    ┌──────────────────┐        │
               ▼                ┌──────────┐   │ MEASURE AMOUNT b │        │
        ┌──────────────┐        │ SET AT   │   │ OF REFLECTED     │        │
        │MEASURE AMOUNT a│      │ NORMAL   │   │ LIGHT            │        │
        │OF REFLECTED   │       │ TIME     │   └────────┬─────────┘        │
        │LIGHT          │       └────┬─────┘            │    S7            │
        └──────┬────────┘            │    S10           ▼                  │
               │                     ▼           ┌──────────────────┐      │
               │               ┌──────────┐      │ SET AT DEW-      │      │
               │               │TURN OFF  │      │ CONDENSATION TIME│      │
               │               │DEW-      │      └────────┬─────────┘      │
               │               │CONDENSATION│            │    S8           │
               │               │FLAG      │              ▼                 │
               │               └────┬─────┘       ┌──────────────────┐     │
               │                    │             │ TURN ON DEW-     │     │
               │                    │             │ CONDENSATION FLAG│     │
               │                    │             └────────┬─────────┘     │
               │                    │                      │               │
  ◄────────────┴────────────────────┴──────────────────────┴───────────────┘
               │
               ▼
          ┌─────────┐
          │   END   │
          └─────────┘
```

# FIG. 5

(a) DVD-R (RECORDABLE)

Pw(Pwd)

Pr(Pwr)

(b) DVD-RW (REWRITABLE)

Pw(Pwd)

Pe
(Ped)  Pr(Prd)

EP 1 777 704 A1

| INTERNATIONAL SEARCH REPORT | International application No. |
|---|---|
| | PCT/JP2005/012575 |

| A. CLASSIFICATION OF SUBJECT MATTER |
|---|
| Int.Cl⁷ G11B7/09, 7/0045, 7/125 |

According to International Patent Classification (IPC) or to both national classification and IPC

| B. FIELDS SEARCHED |
|---|
| Minimum documentation searched (classification system followed by classification symbols) |
| Int.Cl⁷ G11B7/09, 7/0045, 7/125 |

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 9-282694 A (Canon Inc.), 31 October, 1997 (31.10.97), Par. No. [0004] (Family: none) | 1-10 |
| A | JP 62-46437 A (Matsushita Graphic Communication Systems, Inc.), 28 February, 1987 (28.02.87), Full text (Family: none) | 1-10 |
| A | JP 61-242348 A (Toshiba Corp.), 28 October, 1986 (28.10.86), Full text; Figs. 1 to 3 (Family: none) | 1-10 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 July, 2005 (20.07.05) | 09 August, 2005 (09.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003168259 A